# EUROPÄISCHE PATENTSCHRIFT

(11) **EP 2 598 771 B1**
(45) Veröffentlichungstag und Bekanntmachung des Hinweises auf die Patenterteilung: **14.10.2015**
(21) Anmeldenummer: 11721438.7
(22) Anmeldetag: 14.05.2011
(51) Int. Cl.: B66C 13/28, B66F 9/22, E02F 3/42, F16F 9/02, E02F 9/22

(54) **VORRICHTUNG ZUR RÜCKGEWINNUNG VON ENERGIE**
DEVICE FOR RECOVERING ENERGY
DISPOSITIF POUR LA RÉCUPÉRATION D'ÉNERGIE

(30) Priorität: 29.11.2010 US 926599; 27.07.2010 DE 102010032415
(43) Veröffentlichungstag der Anmeldung: 05.06.2013
(60) Teilanmeldung: 15002166.5
(73) Patentinhaber: Hydac Technology GmbH, 66280 Sulzbach/Saar (DE)
(72) Erfinder: BALTES, Herbert, 66679 Losheim (DE); BAUER, Frank, 66646 Marpingen (DE); FELD, Daniel, 66111 Saarbrücken (DE); KLOFT, Peter, 56235 Ransbach-Baumbach (DE)
(74) Vertreter: Bartels, Martin Erich Arthur
(86) Internationale Anmeldenummer: PCT/EP2011/002404
(87) Internationale Veröffentlichungsnummer: WO 2012/013253

(56) Entgegenhaltungen:
- EP-A2- 1 614 814
- WO-A1-98/33989
- DE-A1-102008 018 451
- DE-A1-102008 034 582

## Beschreibung

Die Erfindung betrifft eine Vorrichtung zur Rückgewinnung von Energie bei Arbeitsmaschinen mit den Merkmalen im Oberbegriff von Anspruch 1.

Vorrichtungen dieser Art zur Rückgewinnung von Lageenergie bei Arbeitsmaschinen sind Stand der Technik, siehe beispielsweise WO 93/11363, DE 4 341 660 A, oder EP 0 789 816 B1. Als Energiespeicher weisen derartige Vorrichtungen Druckspeicher auf, die abgegebene Lageenergie als Druckenergie eines Arbeitsgases speichern. Für den Nutzwert derartiger Vorrichtungen ist ausschlaggebend, dass im Betrieb möglichst geringe Energieverluste eintreten. Dabei handelt es sich in erster Linie um Verluste von Wärmeenergie des Speichergases. In der Regel wird ein Großteil der Wärmeenergie, die bei Kompression des Arbeitsgases entsteht, über die Außenwände der beim Stand der Technik als Energiespeicher benutzten Hydrospeicher abgegeben, wobei der großflächige Kontaktbereich zwischen Arbeitsgas und Umgebung bei der verhältnismäßig großen Oberfläche der in Frage kommenden Speichergehäuse (vornehmlich aus Stahl) zu beträchtlichen Wärmeverlusten führen kann.

Die WO 98/33989 A1 beschreibt eine Vorrichtung zur Rückgewinnung von Energie in einem hydraulischen System, wobei das hydraulische System eine Anzahl von Hydrozylindern und Druckspeichern aufweist, die mit einem Vorspanndruck aufgeladen sind und die mit den Hydrozylindern über Druckleitungen verbunden sind, um deren Kolben vorzuspannen.

Die DE 10 2008 034 582 A1 beschreibt ein Arbeitsgerät, insbesondere einen Bagger oder eine Maschine zum Materialumschlag, mit einem über mindestens einen Arbeitshydraulikzylinder bewegbaren Element, wobei mindestens ein Energierückgewinnungs-Hydraulikzylinder zur Energierückgewinnung aus der Bewegung des bewegbaren Elementes vorgesehen ist. Der Energierückgewinnungs-Hydraulikzylinder ist bodenseitig mit einem Arbeitsgas befüllt und weist eine hohle Kolbenstange auf. An einem offenen Ende des Energierückgewinnungs-Hydraulikzylinders ist eine Führung gebildet, welche die Außenseite des Kolbens in einem einen Ölspalt bildenden Abstand von der Innenwand des Hydraulikzylinders führt und am offenen Ende des Kolbens ist eine zweite Führung gebildet, die das Ende des Kolbens unter Beibehaltung des Ölspaltes führt.

Im Hinblick auf diese Problematik liegt der Erfindung die Aufgabe zugrunde, eine Vorrichtung der betrachteten Art zur Verfügung zu stellen, die sich bei besonders einfachem und kostensparendem Aufbau durch eine demgegenüber stark verbesserte Energiebilanz auszeichnet.

Erfindungsgemäß ist diese Aufgabe durch eine Vorrichtung gelöst, die die Merkmale des Patentanspruches 1 in seiner Gesamtheit aufweist.

Danach besteht eine wesentliche Besonderheit der Erfindung darin, dass an den Ölspalt ein Hydrospeicher angeschlossen ist, dessen Gasseite über eine Ladeleitung mit dem Innenraum des Kolbens verbunden ist.

Um das beim Ausfahren des Kolbens und der dadurch bewirkten Verkleinerung der Länge des Ölspaltes verdrängte Öl aufzunehmen und beim Einfahren wieder bereitzustellen, steht mit dem Ölspalt ein Hydrospeicher in Verbindung, der bei Bewegungen des Kolbens Änderungen des Volumens des Ölspaltes kompensiert. Es ist ferner vorgesehen, dass beide Führungen zusammen mit einer im Ölspalt befindlichen Ölfüllung ein Hochdruck-Dichtsystem bilden. Dadurch wird ein Hochdruck-Dichtsystem gebildet, das auch bei Anwendungen mit hohen Drücken, etwa mehr als 100 bar, im Langzeitbetreib sicher arbeitet.

Es ist ein Energiespeicher in Form eines Speicherzylinders vorgesehen, der, mit der Lastmasse mechanisch gekoppelt, bei Bewegung in der einen Richtung pneumatische Druckenergie speichert und bei Bewegung in der anderen Richtung als den Kraftantrieb unterstützender, die gespeicherte Druckenergie in Antriebskraft umsetzender Hilfs-Arbeitszylinder wirkt.

Bei einer besonders bevorzugten Ausführungsform ist vorgegeben, dass der Speicherzylinder als Hilfs-Arbeitszylinder mit einer anzuhebenden und abzusenkenden Lastmasse gekoppelt ist und bei Absenkvorgängen abgegebene Lageenergie in Form pneumatischer Druckenergie speichert.

Der Einsatz eines Energiespeichers in Form eines Speicherzylinders als Ersatz üblicherweise vorgesehener Hydrospeicher verbessert die Energiebilanz in mehr als einer Hinsicht. Zum einen hat die unmittelbare mechanische Koppelung des Speicherzylinders mit der Lastmasse, wodurch die gespeicherte Druckenergie unmittelbar in Hebekraft umsetzbar ist, so dass der Speicherzylinder als zusätzlicher Kraftantrieb wirkt, den Wegfall des Hydrauliksystems zur Folge, wie es beim Stand der Technik zwischen Hydrospeicher und Kraftantrieb erforderlich ist, so dass die diesbezüglich ansonsten anfallenden Energieverluste in Wegfall kommen. Des Weiteren bietet ein Speicherzylinder im Vergleich zu einem Hydrospeicher wesentlich mehr konstruktive Möglichkeiten, den unmittelbaren Wärmeverlust des Arbeitsgases zu verringern.

Dieser unmittelbare Wärmeverlust lässt sich ganz entscheidend verringern, wenn bei besonders vorteilhaften Ausführungsbeispielen die Kolbenstange des Speicherzylinders mit einem hohlen, endseitig offenen Teil den Kolben bildet, dessen Hohlraum in der in den Zylinder voll eingefahrenen Position im Wesentlichen das gesamte Volumen des Arbeitsgases enthält. Bei dieser Bauweise des Kolbens geschieht die Wärmeentwicklung beim Absenken der Kolbenstange im Inneren des Kolbens, also in einem Bereich, der durch die Wandung des hohlen Kolbens von der Zylinderwandung isoliert ist. Da zudem der Kolben so bemessen ist, dass er in seinem Hohlraum im Wesentlichen das Gesamtvolumen des Arbeitsgases enthält, wenn der Kolben voll eingefahren ist, erstreckt sich bei diesem der stärksten Kompression und damit der stärksten Wärmeentwicklung entsprechenden Betriebszustand die Kolbenwandung über die gesamte Länge des Zylinders, so dass dieser beim Zustand der stärksten Wärmeentwicklung doppelwandig ist. Der Wärmeverlust ist somit minimiert.

Andererseits befindet sich bei dieser Bauweise aufgrund der gegebenen Baulänge des Kolbens dessen Wandung bei der voll ausgefahrenen Position mit einem entsprechenden Flächenanteil außerhalb der Zylinderwandung. Bei dieser voll ausgefahrenen Position hat sich das Arbeitsgas entsprechend der Entspannung abgekühlt. Gleichzeitig hat bei dieser Kolbenposition die der Umgebung ausgesetzte Wandfläche, gebildet aus Zylinderfläche und freiliegender Mantelfläche des Kolbens, einen Größtwert. Dementsprechend ist der Wärmewiderstand der Gesamtwandfläche minimal, so dass relativ viel Wärmeenergie aus der Umgebungsluft aufgenommen und an das abgekühlte Arbeitsgas abgegeben wird. Es resultiert eine optimale Energiebilanz der Vorrichtung.

Zur Optimierung der Wärmeenergiebilanz trägt nicht nur die bereichsweise vorhandene Doppelwandanordnung mit bei, sondern vielmehr auch das in der Doppelwandung eingeschlossene Arbeits- oder Betriebmedium, beispielsweise in Form eines Arbeitsgases und/oder in Form von Hydrauliköl. Der Speicherzylinder kann in Form eines Topfes gestaltet sein, an dessen geschlossenem Boden ein Füllanschluss für das Arbeitsgas, wie N₂, vorgesehen ist.

Bei besonders vorteilhaften Ausführungsbeispielen dient der Speicherzylinder als Hilfs-Arbeitszylinder, der einem als Kraftantrieb dienenden, durch ein Hydrauliksystem betätigbaren hydraulischen Arbeitszylinder mechanisch nebengeschaltet ist. Dies ermöglicht eine besonders einfache Bauweise, insbesondere für Hebezeuge, Kranausleger und dergleichen, wo Hydraulikzylinder als unmittelbar an der Lastmasse angreifender Kraftantrieb vorgesehen sind.

Während beim Stand der Technik wieder gewonnene Energie in Form hydraulischer Druckenergie aus einem Hydrospeicher zur Verfügung steht, so dass wieder gewonnene Energie nur für hydraulische Kraftantriebe nutzbar ist, wie Arbeitszylinder oder Hydromotoren, ist die Erfindung in Verbindung mit beliebigen Kraftantrieben nutzbar, die nicht hydraulisch betätigbar zu sein brauchen, etwa bei zur Hebung von Lasten vorgesehenen elektromotorisch betätigten Spindeltrieben, Seilzügen oder dergleichen.

Nachstehend ist die Erfindung anhand von in der Zeichnung dargestellten Ausführungsbeispielen im Einzelnen erläutert. Es zeigen:
- Fig. 1: eine schematisch vereinfachte Darstellung eines Kranauslegers, versehen mit einem Ausführungsbeispiel der erfindungsgemäßen Vorrichtung zur Rückgewinnung von Lageenergie;
- Fig. 2: eine symbolhafte Darstellung, die zur Erläuterung des Funktionsprinzips der Erfindung einen Speicherzylinder in mechanischer Nebenschaltung zu einem Arbeitszylinder zeigt;
- Fig. 3: einen schematisch vereinfacht gezeichneten Längsschnitt eines Speicherzylinders eines ersten Ausführungsbeispieles der erfindungsgemäßen Vorrichtung;
- Fig. 4: einen der Fig. 3 entsprechenden Längsschnitt eines zweiten Ausführungsbeispieles; und
- Fig. 5 und 6: entsprechende Schnittdarstellungen eines dritten bzw. vierten Ausführungsbeispieles der Vorrichtung.

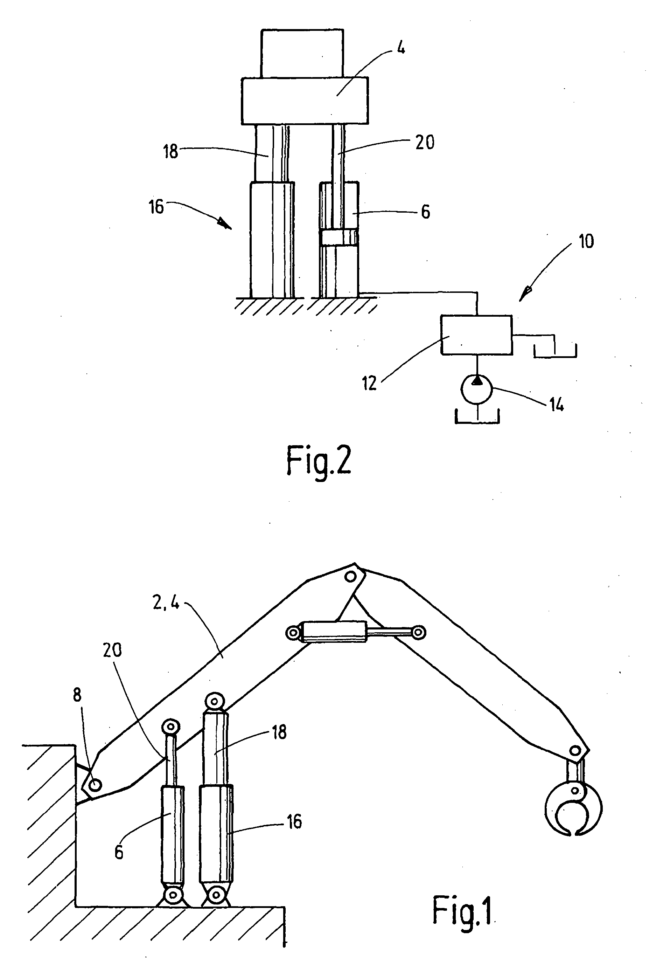

Nachstehend ist die Erfindung anhand von Ausführungsbeispielen erläutert, bei denen ein Kranausleger 2 eine Lastmasse 4 (Fig. 2) bildet. Der Ausleger 2 ist mittels eines Kraftantriebes in Form eines hydraulischen Arbeitszylinders 6 anhebbar, genauer gesagt, um eine Anlenkstelle 8 schwenkbar. Der Arbeitszylinder 6 ist ein Hydraulikzylinder, der durch ein in Fig. 2 lediglich symbolhaft angedeutetes Hydrauliksystem 10 betätigbar ist, von dem lediglich eine Steuerventilanordnung mit 12 und eine Hydropumpe mit 14 bezeichnet sind, siehe Fig. 2. Das Hydrauliksystem 10 kann im Einzelnen in der bei Arbeitsmaschinen üblichen Art und Weise gestaltet sein, so dass hier nicht näher darauf eingegangen zu werden braucht.

Zu dem den Kraftantrieb bildenden Arbeitszylinder 6 ist ein Speicherzylinder 16 mechanisch nebengeschaltet, d.h. die Kolbenstange 18 des Speicherzylinders 16 greift, ebenso wie die Kolbenstange 20 des Arbeitszylinders 6 an der Lastmasse 4 (Ausleger 2) unmittelbar an.

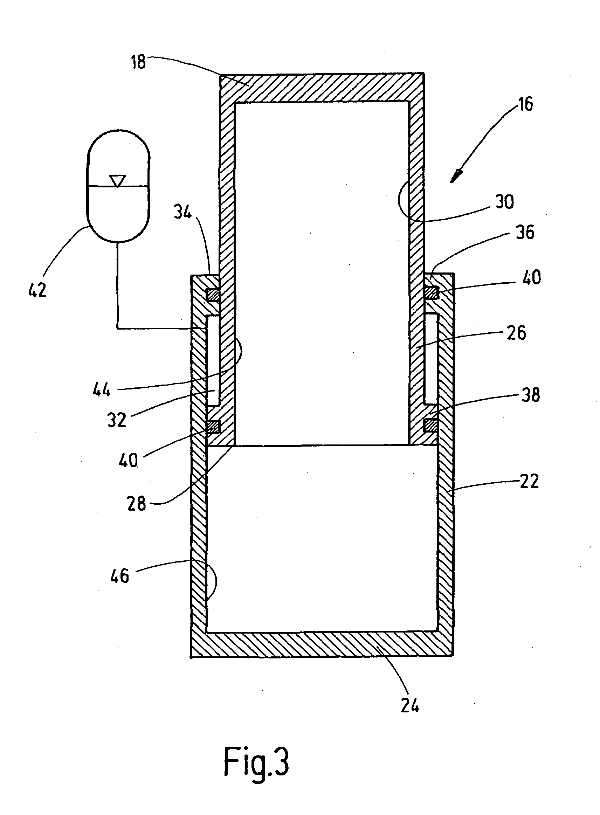

Die Fig. 3 zeigt in gesonderter Darstellung nähere Einzelheiten des Speicherzylinders 16. Wie ersichtlich, hat dieser die Form eines Topfes 22 mit geschlossenem Boden 24, wobei sich an letzterem ein in der Fig. nicht dargestellter Füllanschluss für ein Arbeitsgas befindet, im vorliegenden Beispiel N₂. Beim gezeigten Beispiel bildet das Ende der Kolbenstange 18 den Kolben 26 in Form eines Hohlkörpers mit einem am Kolbenende 28 offenen, inneren Hohlraum 30, der bei der voll eingefahrenen Position des Kolbens 26, wenn sich das Kolbenende 28 am Boden 24 des Topfes 22 befindet, das gesamte Arbeitsgasvolumen enthält. Die Fig. 3 zeigt den Kolben 26 etwa in einer mittleren Position, in der sich das Gasvolumen aus dem vom Kolben 26 freien Innenraum des Topfes 22 und dem Hohlraum 30 des Kolbens 26 zusammensetzt.

Der Kolben 26 ist an der Innenwand des Topfes 22 des Speicherzylinders 16 so geführt, dass sich an der Außenseite des Kolbens 26 ein Ölspalt 32 befindet. Zu diesem Zweck ist am offenen Ende 34 des Topfes 22 eine Führung 36 für den Kolben 26 vorgesehen. Am offenen Kolbenende 28 befindet sich eine zweite Führung 38. Beide Führungen 36, 38 gewährleisten die Beibehaltung des Ölspaltes 32 bei den Kolbenbewegungen und sind zusätzlich jeweils mit einer Dichtungsanordnung 40 versehen, so dass zusammen mit einer Ölfüllung des Ölspaltes 32 nicht nur eine Kolbenschmierung, sondern auch ein Hochdruck-Dichtsystem gebildet ist. Um das bei Kolbenbewegungen veränderliche Volumen des Ölspaltes 32 zu kompensieren, ist am Ölspalt 32 ein Hydrospeicher 42 angeschlossen, der beim Ausfahren des Kolbens 26 verdrängtes Öl aufnimmt und beim Einfahren des Kolbens 26 wieder abgibt.

Wie erwähnt, befindet sich in Fig. 3 der Kolben 26 in einer mittleren Position, bei der die Lastmasse 4 teilweise abgesenkt ist. Wird die Lastmasse 4 vollständig abgesenkt, bewegt sich der Kolben 26 in Richtung auf den Boden 24 des Topfes 22, so dass das Kolbenende 28 in der Endlage der Absenkbewegung dem Boden 24 angenähert ist. Beim Einfahren des Kolbens 26 wird das Arbeitsgas auf ein Volumen verdichtet, das bei der voll eingefahrenen Position dem Volumen des Hohlraumes 30 des Kolbens 26 entspricht. Dadurch wird die beim Absenken abgegebene Lageenergie der Lastmasse 4 in Druckenergie im Speicherzylinder 16 umgesetzt. Die voll eingefahrene Position des Kolbens 26 entspricht dem Zustand der stärksten Verdichtung und damit der stärksten Erwärmung des Arbeitsgases. Gleichzeitig ist bei der Erfindung bei diesem Betriebszustand das erwärmte Arbeitsgas doppelwandig eingeschlossen, weil sich die Kolbenwand 44 bei dieser Position über die Gesamtlänge des Topfes 22 entlang der Topfwand 46 erstreckt. Hinzu kommt, dass das im Ölspalt 32 gekammerte Medium, das sich praktisch über die Gesamtlänge des Topfes 22 erstreckt, eine zusätzliche Isolationsschicht zwischen Topfwand 46 und Kolbenwand 44 bildet.

Beim Zustand der stärksten Erwärmung ist daher der Speicherzylinder 26 gleichzeitig im Zustand der besten Wärmeisolation. Andererseits befindet sich bei der voll ausgefahrenen Position des Kolbens 26, also einem Zustand, bei dem aufgrund der Expansion sich das Arbeitsgas in dem am stärksten abgekühlten Zustand befindet, der Kolben 26 mit nahezu der gesamten Länge seiner Kolbenwand 44 außerhalb des Topfes 22, d.h., während des "unterkühlten" Betriebszustandes bietet der Speicherzylinder 16 den Größtwert der zur Umgebung freiliegenden Wandfläche, nämlich der im Wesentlichen gesamten Fläche der Topfwand 46 und der Kolbenwand 44, so dass relativ viel Wärmemenge aus der Umgebungsluft aufgenommen werden kann. Durch die geringe Wärmeabgabe bei "überhitztem" und die hohe Wärmeaufnahme bei "unterkühltem" Zustand des Arbeitsgases liegt bei der Erfindung daher insgesamt eine gute Energiebilanz vor.

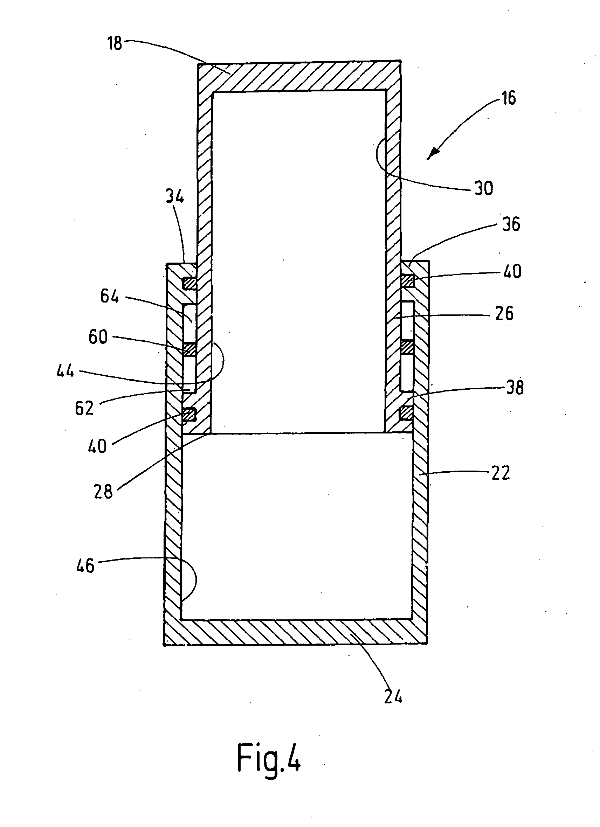

Die Fig. 4 zeigt ein Ausführungsbeispiel, das gegenüber Fig. 3 insofern vereinfacht ist, als kein am Ölspalt 32 vorgesehener Hydrospeicher vorhanden ist. Stattdessen enthält der Ölspalt 32 keine vollständige Ölfüllung, sondern ist durch eine schwimmende, also axial bewegbare Dichtung 60 in eine eine Ölfüllung enthaltende Ölseite 62 und eine mit Stickstoff gefüllte Gasseite 64 unterteilt. Bei den Bewegungen des Kolbens 26 bildet der Ölspalt somit eine Art miniaturisierten Hydrospeicher.

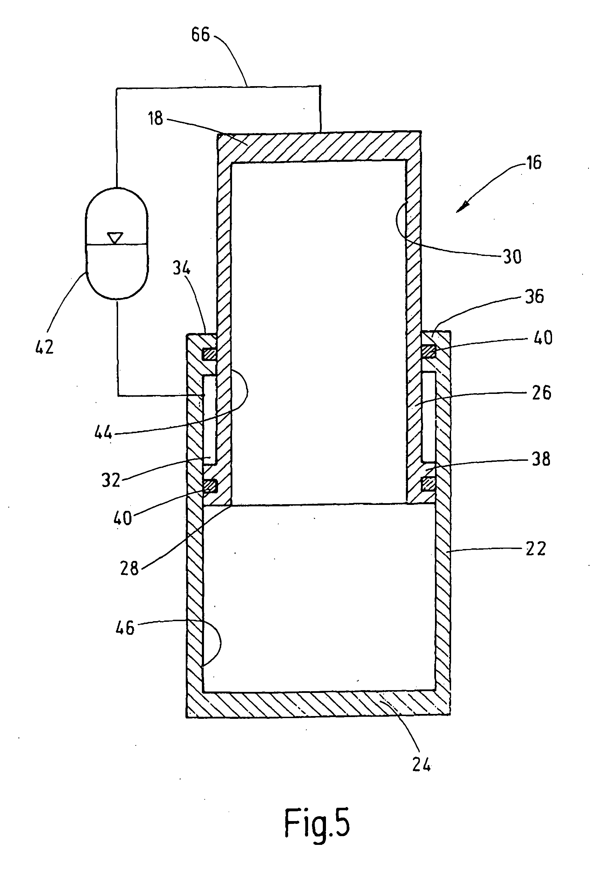

Fig. 5 zeigt ein weiter abgewandeltes Beispiel, bei dem, bei am Ölspalt 32 angeschlossenem Hydrospeicher 42, dessen Gasseite über eine Ladeleitung 66 mit dem Innenraum des Kolbens 26 verbunden ist, so dass der Fülldruck des Speichers 42 selbsttätig auf dem Druckniveau des Arbeitszylinders 16 gehalten ist. In der Ladeleitung 66 können, was nicht dargestellt ist, Druckbegrenzungs- und/oder Rückschlagventile vorhanden sein, um den Fülldruck des Hydrospeichers 42, wenn es gewünscht ist, vorzugeben oder in eine Richtung zu lenken. In Abänderung dieser Lösung kann es auch vorteilhaft sein, die Leitung 66 am Boden 24 des Speicherzylinders 16 anzuschließen und nicht im Bereich der oberen, kopfseitigen Abdeckung der Kolbenstange 18, so dass eine direkte fluidführende Verbindung zwischen dem Inneren des Arbeitszylinders 16 und dem Speicher 42 gegeben ist und zwar auf der Seite des Speichers 42, die der Auslässstelle der Leitung, die zum Raum 32 führt, gegenüberliegt.

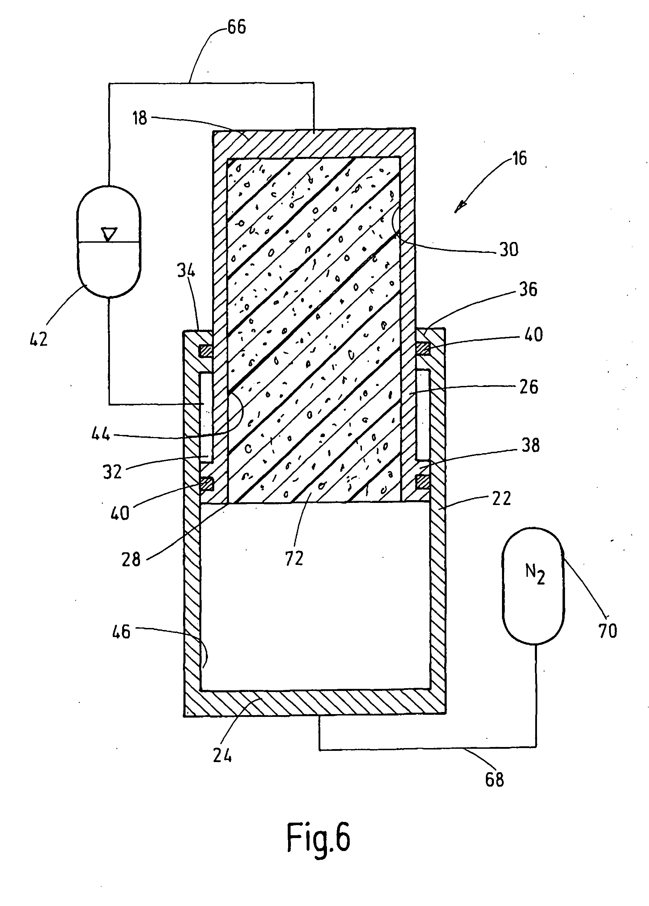

Fig. 6 zeigt eine weitere Variante, bei der der Innenraum des Speicherzylinders 6 über eine Versorgungsleitung 68 mit einer Versorgungsquelle 70 für Arbeitsgas verbunden ist. Außerdem ist zur weiteren Verbesserung der Wärmeisolation der innere Hohlraum 30 des Kolbens 26 mit einem großporigen Schaummaterial 72 zur Gänze gefüllt, der partiell auch das Arbeitsgas aufnehmen kann.

Es sei bemerkt, dass bei den stark schematisch vereinfachten Darstellungen der Fig. 3 bis 6, die lediglich das Funktionsprinzip verdeutlichen, konstruktive Einzelheiten weggelassen sind, beispielsweise eine geteilte Gestaltung des den Einbau des Kolbens 26 ermöglichenden offenen Endes 34 des Topfes 22 oder Anschlüsse für das Einbringen der Medien in den Ölspalt 32.

## Patentansprüche

1. Vorrichtung zur Rückgewinnung von Energie bei Arbeitsmaschinen, mit mindestens einem Kraftantrieb (6), der zum Bewegen einer Lastmasse (4) im Hingang und Hergang betätigbar ist, und mit einem Energiespeicher (16), der beim Bewegen der Lastmasse (4) in der einen Richtung abgegebene Energie aufnimmt und für eine nachfolgende Bewegung in der anderen Richtung zur Verfügung stellt, wobei ein Energiespeicher in Form eines Speicherzylinders (16) vorgesehen ist, der, mit der Lastmasse (4) mechanisch gekoppelt, bei Bewegung in der einen Richtung pneumatische Druckenergie speichert und bei Bewegung in der anderen Richtung als den Kraftantrieb (6) unterstützender, die gespeicherte Druckenergie in Antriebskraft umsetzender Hilfs-Arbeitszylinder wirkt, wobei an dem offenen Ende (34) des Speicherzylinders (16) eine Führung (36) gebildet ist, die die Außenseite des Kolbens (26) in einem einen Ölspalt (32) bildenden Abstand von der Innenwand (46) des Speicherzylinders (16) führt, wobei am offenen Ende (28) des Kolbens (26) eine zweite Führung (38) gebildet ist, die das Ende (28) des Kolbens (26) unter Beibehaltung des Ölspaltes (32) führt, und wobei beide Führungen (36, 38) zusammen mit einer im Ölspalt (32) befindlichen Ölfüllung ein Hochdruck-Dichtsystem bilden, **dadurch gekennzeichnet, dass** an den Ölspalt (32) ein Hydrospeicher (42) angeschlossen ist, dessen Gasseite über eine Ladeleitung (66) mit dem Innenraum des Kolbens (26) verbunden ist.

2. Vorrichtung nach Anspruch 1, **dadurch gekennzeichnet, dass** der Speicherzylinder (16) als Hilfs-Arbeitszylinder mit einer anzuhebenden und abzusenkenden Lastmasse (4) gekoppelt ist und bei Absenkvorgängen abgegebene Lageenergie in Form pneumatischer Druckenergie speichert.

3. Vorrichtung nach Anspruch 1 oder 2, **dadurch gekennzeichnet, dass** die Kolbenstange (18) des Speicherzylinders (16) mit einem hohlen, endseitig offenen Teil den Kolben (26) bildet, dessen Hohlraum (30) in der in den Zylinder (16) voll eingefahrenen Position im Wesentlichen das gesamte Volumen des Arbeitsgases enthält.

4. Vorrichtung nach einem der vorstehenden Ansprüche, **dadurch gekennzeichnet, dass** der Speicherzylinder (16) die Form eines Topfes (22) hat, an dessen geschlossenem Boden (24) ein Füllanschluss für das Arbeitsgas, wie N₂, vorgesehen ist.

5. Vorrichtung nach einem der vorstehenden Ansprüche, **dadurch gekennzeichnet, dass** der Speicherzylinder (16) als Hilfs-Arbeitszylinder einem als Kraftantrieb dienenden, durch ein Hydrauliksystem (10) betätigbaren hydraulischen Arbeitszylinder (6) mechanisch nebengeschaltet ist.

## Claims

1. A device for recovering energy in working machines, with at least one power drive (6) which can be actuated to move a load mass (4) back and forth, and with an energy storage system (16) which absorbs the energy released in the movement of the load mass (4) in one direction and which makes it available for a subsequent movement in the other direction, an energy storage system being provided in the form of an accumulator cylinder (16) which, mechanically coupled to the load mass (4), stores pneumatic pressure energy for movement in one direction and, for movement in the other direction, acts as an auxiliary working cylinder which supports the power drive (6) and which converts the stored pressure energy into driving force, there being formed on the open end (34) of the accumulator cylinder (16) a guide (36) which guides the outside of the piston (26) at a distance from the inner wall (46) of the accumulator cylinder (16), which distance forms an oil gap (32), there being formed on the open end (28) of the piston (26) a second guide (38) which guides the end (28) of the piston (26) while maintaining the oil gap (32), and the two guides (36, 38) together with an oil charge located in the oil gap (32) forming a high pressure sealing system, **characterised in that** there is connected to the oil gap (32) a hydraulic accumulator (42) the gas side of which is connected to the interior of the piston (26) by a charging line (66).

2. The device according to Claim 1, **characterised in that** the accumulator cylinder (16) as the auxiliary working cylinder is coupled to a load mass (4) which can be raised and lowered and stores potential energy released in lowering processes in the form of pneumatic pressure energy.

3. The device according to Claim 1 or 2, **characterised in that** the piston rod (18) of the accumulator cylinder (16) with a hollow, end-side open part forms the piston (26) the cavity (30) of which in the position fully retracted into the cylinder (16) contains essentially the entire volume of the working gas.

4. The device according to any of the preceding claims, **characterised in that** the accumulator cylinder (16) has the shape of a cup (22) on the closed bottom (24) of which there is a filler port for the working gas, such as N₂.

5. The device according to any of the preceding claims, **characterised in that** the accumulator cylinder (16), as an auxiliary working cylinder, is mechanically connected in parallel to a hydraulic working cylinder (6) which can be actuated by a hydraulic system (10) and which is used as a power drive.

## Revendications

1. Dispositif de récupération d'énergie dans des machines fournissant du travail, comprenant au moins un entraînement (6) mécanique, qui, pour le déplacement d'une masse (4) de charge, peut être actionné en va-et-vient, et comprenant un accumulateur (16) d'énergie, qui absorbe de l'énergie cédée lors du déplacement de la masse (4) de charge dans un premier sens et en met à disposition pendant un mouvement suivant dans l'autre sens, un accumulateur d'énergie étant prévu sous la forme d'un cylindre (16) accumulateur, qui, en étant couplé mécaniquement à la masse (4) de charge, emmagasine de l'énergie de pression pneumatique dans le déplacement dans un sens et sert, dans le déplacement dans l'autre sens, de cylindre de travail auxiliaire venant au soutien de l'entraînement (6) mécanique et transformant l'énergie de pression emmagasinée en force d'entraînement, dans lequel il est formé, à l'extrémité (34) ouverte du cylindre (16) accumulateur, un guidage (36), qui guide le côté extérieur du piston (26) à une distance, formant une fente (32) à huile, de la paroi (46) intérieure du cylindre (16) accumulateur, dans lequel il est formé, à l'extrémité (28) ouverte du piston (26), un deuxième guidage (38), qui guide l'extrémité (28) du piston (26) en conservant la fente (32) à huile et dans lequel les deux guidages (36 38) forment ensemble avec un remplissage d'huile, se trouvant dans la fente (32) à huile, un système d'étanchéité de haute pression, **caractérisé en ce que**, à la fente (32) à huile, est raccordé un hydroaccumulateur (42), dont le côté gaz communique, par un conduit (66) de charge, avec l'intérieur du piston (26).

2. Dispositif suivant la revendication 1, **caractérisé en ce que** le cylindre (16) accumulateur est couplé, comme cylindre de travail auxiliaire, à une masse (4) de charge à soulever et à abaisser et accumule, sous forme d'énergie de pression pneumatique, de l'énergie potentielle cédée dans les opérations d'abaissement.

3. Dispositif suivant la revendication 1 ou 2, **caractérisé en ce que** la tige (18) de piston du cylindre (16) accumulateur forme, par une partie creuse ouverte du côté de l'extrémité, le piston (26), dont la cavité (30) contient, dans la position entrée complètement dans le cylindre (16), sensiblement tout le volume du gaz de travail.

4. Dispositif suivant l'une des revendications précédentes, **caractérisé en ce que** le cylindre (16) accumulateur a la forme d'un pot (22), au fond (24) fermé duquel est prévu un raccord de remplissage pour du gaz de travail, comme du N₂.

5. Dispositif suivant l'une des revendications précédentes, **caractérisé en ce que** le cylindre (16) accumulateur est adjoint mécaniquement, comme cylindre de travail auxiliaire, à un cylindre (6) de travail hydraulique servant d'entraînement mécanique et pouvant être actionné par un système (10) hydraulique.
